Europäisches Patentamt

(19) European Patent Office

Office européen des brevets

(11) Veröffentlichungsnummer : **0 032 917**
**B1**

(12) **EUROPÄISCHE PATENTSCHRIFT**

(45) Veröffentlichungstag der Patentschrift :
**17.10.84**

(21) Anmeldenummer : **80901397.2**

(22) Anmeldetag : **23.07.80**

(86) Internationale Anmeldenummer :
**PCT/DE 80/00105**

(87) Internationale Veröffentlichungsnummer :
**WO/8100201 (05.02.81 Gazette 81/04)**

(51) Int. Cl.³ : **A 61 C 19/00**, A 61 B 5/00

(54) VORRICHTUNG ZUR AUFZEICHNUNG UND AUSWERTUNG VON ZAHNBEFUNDEN.

(30) Priorität : 25.07.79 DE 2930142
22.04.80 DE 3015345
22.04.80 DE 3028992

(43) Veröffentlichungstag der Anmeldung :
05.08.81 Patentblatt 81/31

(45) Bekanntmachung des Hinweises auf die Patenterteilung : 17.10.84 Patentblatt 84/42

(84) Benannte Vertragsstaaten :
AT CH DE FR GB LI NL SE

(56) Entgegenhaltungen :
FR-A- 2 164 405
US-A- 4 184 175

(73) Patentinhaber : **Fried. Krupp Gesellschaft mit beschränkter Haftung**
**Altendorfer Strasse 103**
**D-4300 Essen 1 (DE)**

(72) Erfinder : **EENBOOM, Algund**
**Annenstrasse 26**
**D-2950 Leer (DE)**
Erfinder : **MÜLLER, Edzard**
**Kurt-Schumacher-Strasse 46**
**D-2971 Hinte 1 (DE)**

**Beschreibung**

Die Erfindung betrifft eine Vorrichtung zur Aufzeichnung und Auswertung von medizinischen Befunden, mit einer an eine zwei verschiedene Schaltbefehle liefernde Eingabevorrichtung angeschlossenen elektronischen Schaltung zur Informationsverarbeitung und Erzeugung bildlicher Darstellungen der Befunde in besonderer Ausführung zur Aufzeichnung und Auswertung von Zahnbefunden.

Zur Kontrolle der Mundhygiene im Rahmen einer systematischen Paradontalbehandlung ist eine mehrfache, in bestimmten Zeitabständen wiederholte exakte Befundung des Gebisses über eventuell vorhandene Zahnbeläge (Plaque) unerläßlich. Dabei genügt die bloße visuelle Feststellung und eine ggf. noch erstellte handschriftliche Aufzeichnung des Plaque-Befundes den Anforderungen für eine konsequente Paradontalbehandlung nicht mehr. Es ist bereits bekannt, die von einem Zahnarzt visuell ermittelten Befunde von einer Hilfskraft entweder nur in der Anzahl festhalten zu lassen und den sogenannten Plaque-Index zu ermitteln oder die Befunde entsprechend dem Zahnschema manuell in einen Vordruck einzutragen. Der ermittelte Plaque-Index hat für den Patienten nur eine geringe Aussagekraft und bleibt wenig Motivationsanreiz zur besseren Pflege seiner Zähne, weil die räumliche Verteilung der Zahnbeläge nicht ersichtlich ist. Das manuelle Eintragen der Befunde dagegen bedeutet wegen der zusätzlich erforderlichen Hilfskraft einen verhältnismäßig hohen Aufwand, so daß sich diese Methode für eine breite Anwendung verbietet.

Aus der FR-A-21 64 405 ist ein Verfahren bekannt, das ein Formular mit einem aufgedruckten Schema von z. B. einem Knochengerüst und daneben angeordneten Markierfeldern, die den einzelnen Stellen des Knochengerüstes zugeordnet sind, benutzt. Der untersuchende Arzt trägt seine Befunde durch Anstreichen einzelner Markierfelder mit einem Bleistift oder dergl. in das Formular ein. Diese Formulare werden anschließend auf eine automatische Lesevorrichtung gelegt, die die eingetragenen Markierungen lagegerecht liest und als codierte Signale an einen Computer gibt, der nach einem vorher programmierten Verfahren den Befund auswertet. Auch bei diesem Verfahren, das vornehmlich für die Radiologie geschaffen ist, muß durch eine Hilfskraft ein Formular manuell ausgefüllt werden, oder der untersuchende Arzt muß laufend zwischen Untersuchung und Notieren wechseln.

Der vorliegenden Erfindung liegt die Aufgabe zugrunde, eine Vorrichtung zur Aufzeichnung und Auswertung von medizinischen Befunden, insbesondere Zahnbefunden, vorzuschlagen, die sich nicht auf das bloße Festhalten der Anzahl bestimmter Befundungsergebnisse beschränkt, sondern eine automatische räumliche Aufzeichnung der Ergebnisse entsprechend einem Zahnschema erlaubt, ohne daß eine Hilfskraft (außer dem untersuchenden Arzt) erforderlich ist. Durch eine solche Vorrichtung soll es gelingen, den Befund dem Patienten besser erläutern und ihn dabei gleichzeitig für eine nachhaltige Zahnpflege motivieren zu können.

Die Aufgabe wird durch eine Vorrichtung der eingangs beschriebenen Art gelöst, bei der ein Zähler eine der Anzahl der Untersuchungspositionen entsprechende Anzahl von Markierelementen einer Markiereinrichtung zum Markieren eines mit einem Zahnschema bedruckten Markierungsträgers und den Markierelementen jeweils vorgeschaltete Schaltverstärker vorgesehen sind, wobei die Markierelemente den Untersuchungspositionen im Zahnschema entsprechend angeordnet sind und die Eingabevorrichtung, der Zähler und die Schaltverstärker derart ausgebildet und miteinander verkuppelt sind, daß der Zähler bei jedem der beiden Schaltbefehle um eine Position weiterschaltet und den der jeweiligen Untersuchungspositionen entsprechenden Schaltverstärker vorbereitet und daß bei Vorliegen des einen Schaltbefehls der vorbereitete Schaltverstärker das zugeordnete Markierelement erregt.

Werden z. B. die Zähne des zu untersuchenden Patienten der Reihe nach einem Zahnschema entsprechend untersucht, so kann das Ergebnis der Befundung für jeden Untersuchungspunkt (z. B. Interdentalraum) in die erfindungsgemäße Vorrichtung eingegeben werden, wobei die nach dem Zahnschema aufgebaute und für jeden Untersuchungspunkt ein Markierelement aufweisende Markiereinrichtung die Befunde räumlich zuordnet und entsprechend wiedergibt.

Die vorgeschlagene Vorrichtung erlaubt, den Befundungsvorgang mit geringerem Material-, Personal- und Zeitaufwand durchzuführen und bietet vor allem die Möglichkeit, dem Patienten den Befundungsvorgang eindrucksvoll vor Augen zu halten. Die optische Markierung kann entweder anhand von bei positivem Befund aufleuchtenden Glühlampen für jeden Untersuchungspunkt und/oder anhand einer graphischen Aufzeichnung erfolgen.

Vorteilhaft ist es, wenn die Zahl der positiven Befunde ins Verhältnis gesetzt wird zur Zahl der Untersuchungspunkte und der so gebildete Quotient in einem Anzeigefeld als sogenannter Index (z. B. Plaque-Index) in Prozent angezeigt wird. Der Arzt und auch der Patient haben so die Möglichkeit, den Erfolg einer Paradentalbehandlung anhand des Index verfolgen zu können.

Weitere vorteilhafte Ausführungsformen der erfindungsgemäßen Vorrichtung werden in den abhängigen Ansprüchen beschrieben und anhand der Ausführungsbeispiele der Erfindung näher erläutert. Es zeigen

Figur 1 ein Ausführungsbeispiel der erfindungsgemäßen Vorrichtung in schematischer Darstellung,

Figur 2 einen Markierungsträger für die Vorrichtung nach Fig. 1,

Figur 3   ein Netzteil für die Vorrichtung nach Fig. 1,

Figur 4   einen Schaltverstärker,

Figur 5   einen Impulsgeber,

Figur 6   einen Zählerbaustein mit Ansteuerverstärkern, bestehend aus den Teilfiguren 6A und 6B,

Figur 7   die schematische Darstellung eines Anzeigetableaus gemäß einer Weiterbildung,

Figur 8   einen Sensorgriffel gemäß einer Weiterbildung,

Figur 9   einen NF-Verstärker für den Sensorgriffel nach Fig. 8,

Figur 10   einen Anzeigeverstärker für das Tableau nach Fig. 7,

Figur 11   eine weitere Ausführungsform eines Anzeigeverstärkers,

Figur 12   eine Weiterbildung der Erfindung mit Speichergerät und Drucker.

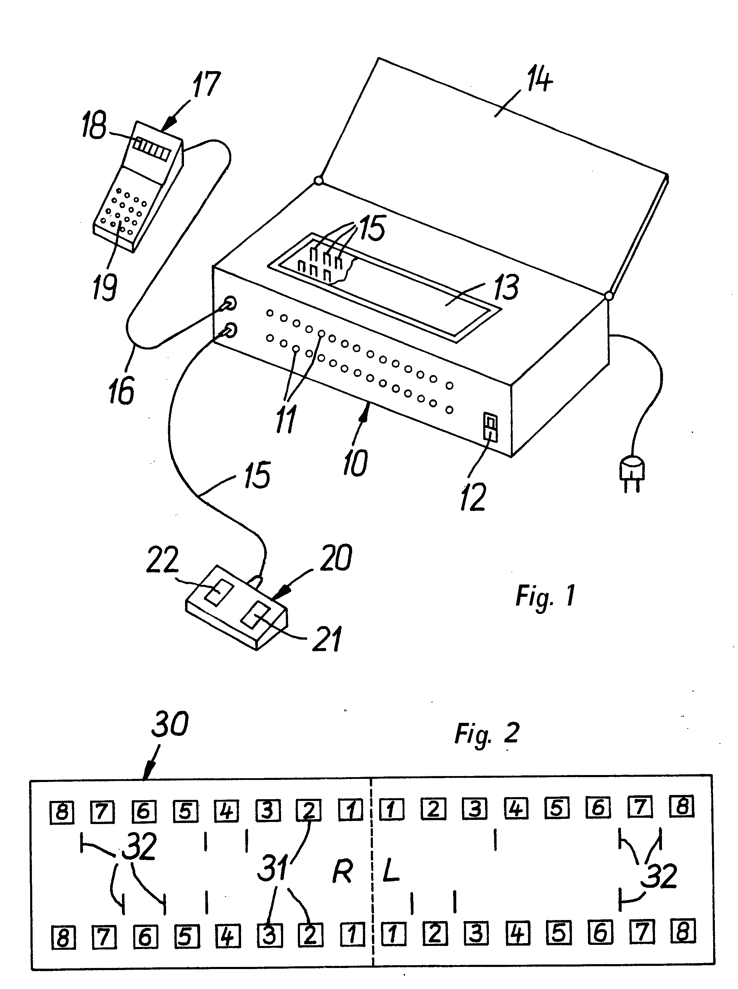

Die in Fig. 1 dargestellte Vorrichtung besteht aus einem Registriergerät 10 sowie einer daran angeschlossenen Doppelfußtaste 20 und einem angeschlossenen Rechner 17. Das Registriergerät 10 hat auf seiner Oberseite eine als Markierungsfeld ausgebildete Markierungseinrichtung 13 mit einer Vielzahl von Heizelementen als Markierelemente 15. Auf dieses Markierungsfeld ist ein Markierungsträger 30 (Fig. 2) auflegbar und durch einen klappbaren Deckel 14 anpreßbar. Dieser Markierungsträger ist aus wärmeempfindlichem Papier und enthält ein Zahnschema bekannter Anordnung aufgedruckt. Die Zahnpositionen der vier Quadranten sind mit den Ziffern 1-8 bezeichnet. Das Registriergerät 10 weist außerdem ein Feld von Leuchtdioden 11 auf.

Die Arbeitsweise der erfindungsgemäßen Vorrichtung soll nun anhand der Fig. 1 und 2 beschrieben werden : Auf das Markierungsfeld 13 wird ein Markierungsträger 30 aufgelegt und durch Niederklappen des Deckels 14 angedrückt. Nach dem Einschalten über den Netzschalter 12 befindet sich das Gerät im Anfangszustand und ein in dem Registriergerät 10 befindlicher Zähler in der Anfangsposition. Jetzt wird das Gebiß des Patienten in bestimmter Reihenfolge auf Zahnbelag in den Interdentalräumen untersucht. Ist der Befund positiv, so wird die Plustaste 21 der Doppelfußtaste 20 gedrückt ; ist der Befund negativ, die Negativtaste 22. Durch Betätigen einer dieser beiden Tasten 21 oder 22 schaltet der Zähler in die erste Position und die erste der Leuchtdioden 11 leuchtet auf. War die Plustaste gedrückt, so wird gleichzeitig das erste der Heizelemente 15 eingeschaltet und bewirkt auf dem Markierungsträger 30 eine Markierung 32 zwischen den Zähnen 8 und 7 im linken oberen Quadranten.

Jedes Betätigen einer der beiden Tasten 21 oder 22 schaltet den Zähler um eine Position weiter und die zugeordnete Leuchtdiode zeigt die jeweilige Untersuchungsposition an. War eine Positivtaste gedrückt, wird an der zugeordneten Markierposition durch Einschalten des jeweiligen Heizelementes 15 eine Markierung erzeugt ; war die Negativtaste gedrückt, erfolgt an der zugeordneten Markierposition keine Markierung. Dies wird so lange fortgeführt, bis die letzte der Markierpositionen erreicht ist. Aus dem Markierungsträger 30 ist nun klar erkennbar, an welchen Stellen Zahnbelag vorhanden ist, und dieser Belag kann mit solchen aus weiteren Untersuchungen verglichen werden. Ebenso kann der Plaque-Index durch Teilen der Anzahl der positiven Befunde durch die Anzahl der Gesamtpositionen ermittelt werden.

Parallel zur Markierung des Markierungsträgers wird bei jedem positiven Befund über die Leitung 16 ein Zählimpuls auf den Rechner 17 gegeben, dessen Anzeigevorrichtung 18 nach Abschluß der Untersuchung die Anzahl der positiven Befunde anzeigt. Dieses Ergebnis wird anschließend durch Eintasten der Anzahl der Untersuchungsschritte dividiert (Tastatur 19) und man erhält nach Prozentbildung den Plaque-Index.

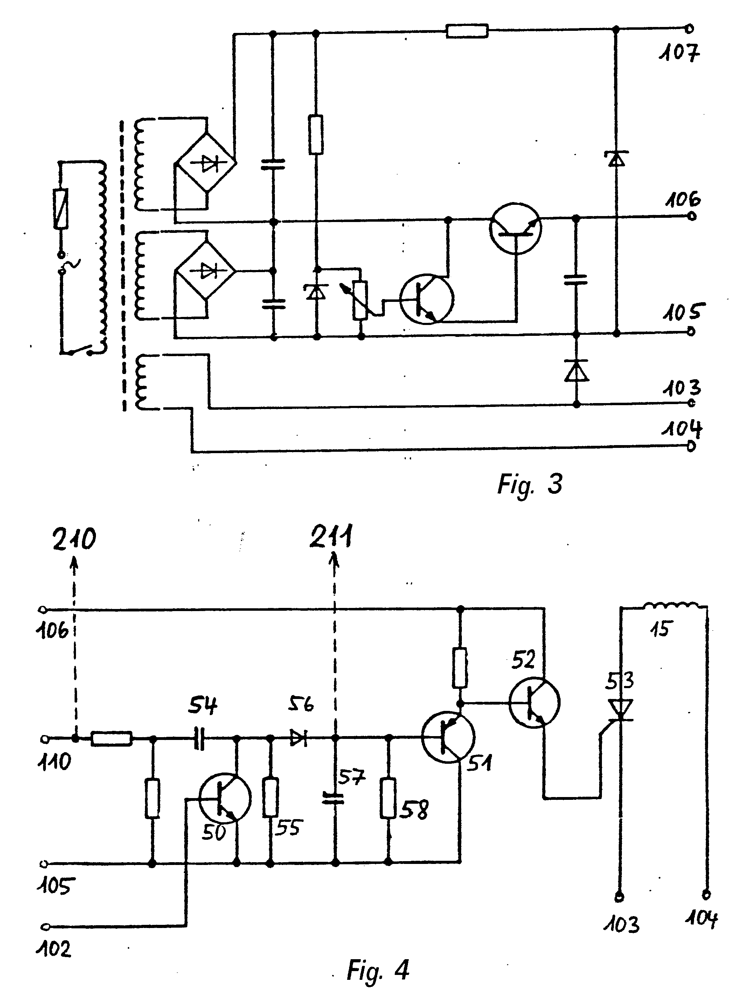

Anschließend soll nun die Arbeitsweise der Schaltungsanordnung nach den Figuren 3 bis 6 beschrieben werden. Hierbei ist zu beachten, daß Leitungen bzw. Anschlüsse der verschiedenen Figuren mit gleichen Ziffern oder Buchstaben jeweils miteinander verbunden sind.

Das Netzteil (Fig. 3) liefert gegenüber der Klemme 105 (Masse) an Klemme 106 eine Gleichspannung von + 9 Volt und an Klemme 107 eine Gleichspannung von + 24 Volt. Die an den Klemmen 103, 104 liegende Wechselspannung von 3 Volt ist für die Heizelemente 15 bestimmt.

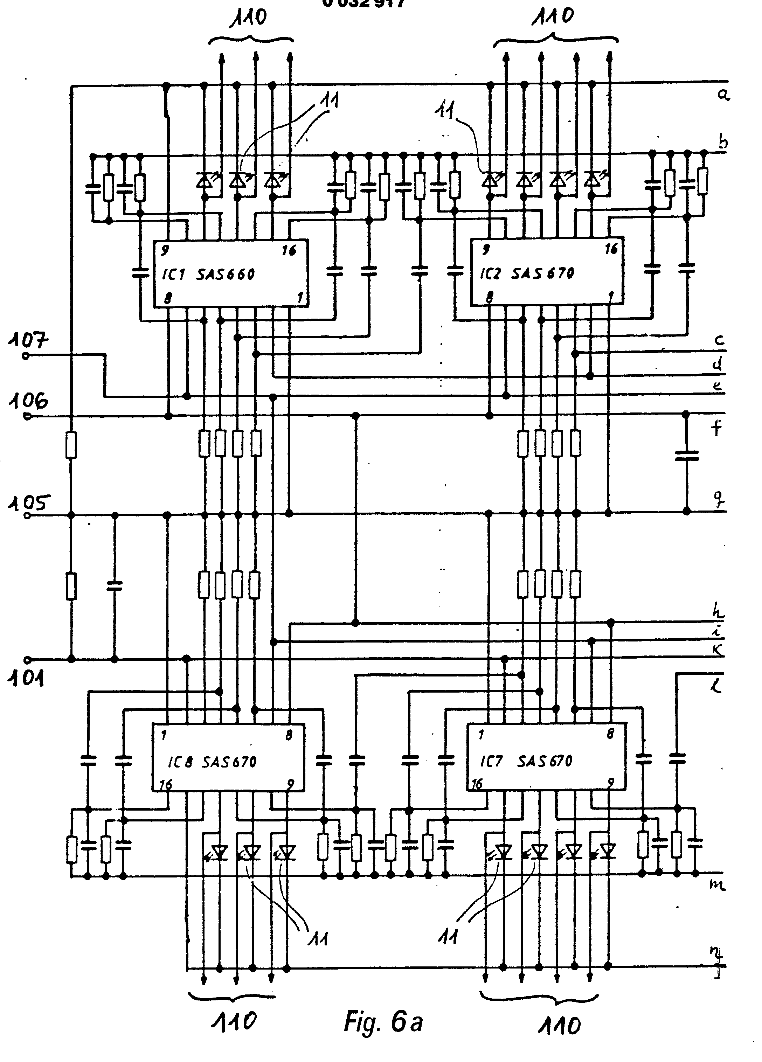

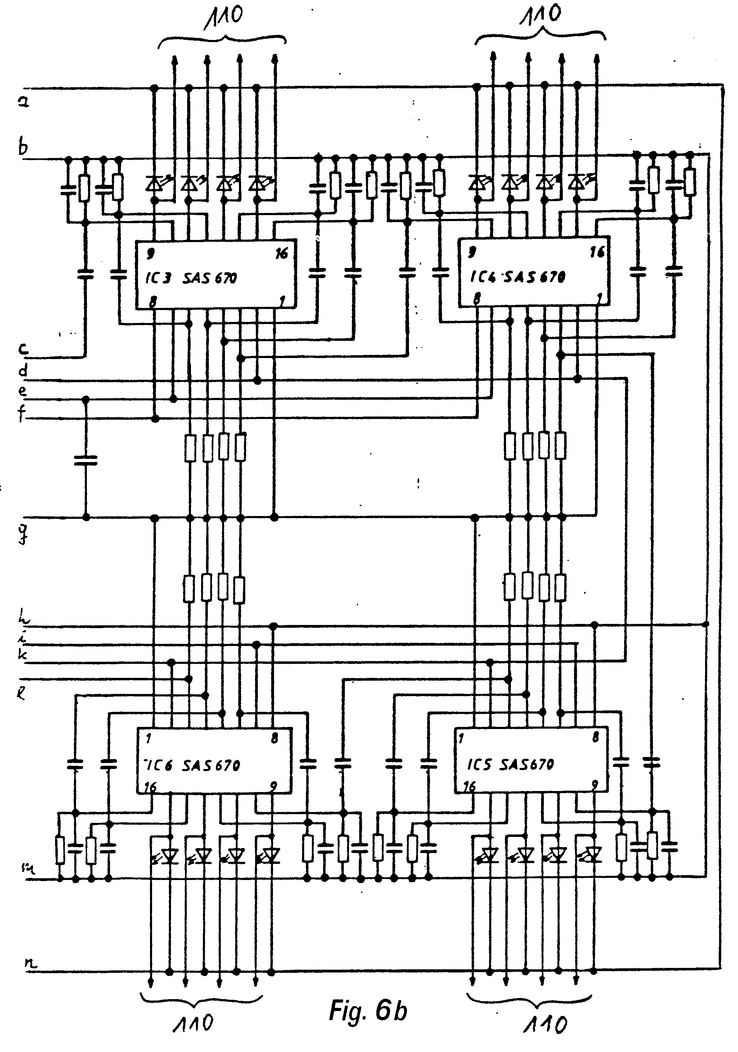

Fig. 4 zeigt einen Schaltverstärker, wie er in 30-facher Ausführung zur Ansteuerung der dreißig Heizelemente 15 vorgesehen ist. Die Eingänge 110 der Schalterverstärker sind mit den zugeordneten Ausgängen 110 des Zählers (Fig. 6) verbunden. Je nach Zählerstand wird also jeweils einem der Schaltverstärker über den Anschluß 110 ein Impuls zugeleitet, der über die Transistoren 51 und 52 den Thyristor 53 zündet, wenn dieses Signal nicht über den Transistor 50 kurzgeschlossen wird. Die sich aus dem Kondensator 57 und dem Widerstand 58 ergebende Zeitkonstante ist so bemessen, daß der Thyristor 53 etwa 2,5 Sekunden durchgeschaltet bleibt.

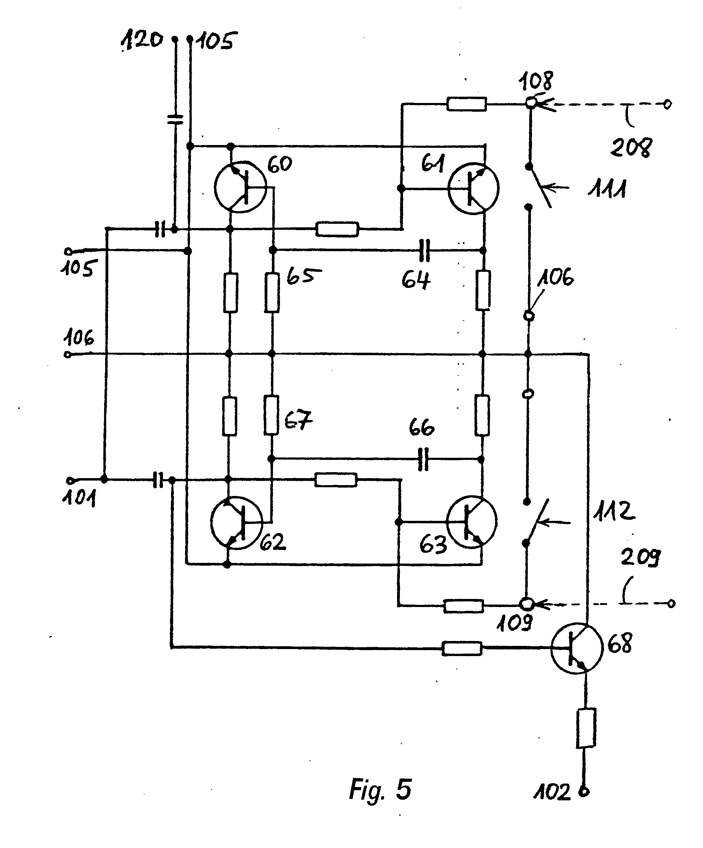

Fig. 5 zeigt eine Anordnung von zwei Impulsgebern, um aus den Betätigungen der Plustaste 21 (Kontakt 111) bzw. der Minustaste 22 (Kontakt 112) definierte Steuerimpulse für den Zähler (Fig. 6) zu gewinnen (Prellunterdrückung). Jeder Impulsgeber ist mit je zwei Transistoren 60, 61 bzw. 62, 63 als Monoflop aufgebaut und liefert beim Anstoß durch Schließen des zugeordneten Schalters 111 bzw. 112 einen Ausgangsimpuls von ca 0,5 Sekunden Dauer am Kollektor des Transistors 60 bzw. 62. Diese Impulse gelangen über einen Koppelkondensator an den Anschluß 101, der zum Zähler (Fig. 6) führt.

Wird die Plustaste 21 (Schalter 111) betätigt, so gelangt ein Zählimpuls über den Anschluß 101 an den Zähler. Gleichzeitig gelangt von dem entsprechenden Zählerausgang ein Signal an den zugeordneten Schaltverstärker (Eingang 110), so daß der Thyristor 53 das entsprechende Heizelement für 2,5 Sekunden an Spannung legt. Wird die Minustaste 22 (Schalter 112) betätigt, so gelangt ebenfalls ein Zählimpuls über den Anschluß 101 an den Zähler. Gleichzeitig werden jedoch die Transistoren 68 und 50 (Fig. 4) leitend, wodurch ein an dem Anschluß 110 des Schaltverstärkers (Fig. 4) anliegendes Signal kurzgeschlossen und der zugeordnete Thyristor 53 nicht gezündet wird. An das diesem Schaltverstärker und dem jeweiligen Zählerstand zugeordnete Heizelement 15 wird also keine Spannung gelegt.

Der in Fig. 6 dargestellte Zähler ist mit acht integrierten Zählbausteinen IC1 bis IC8 aufgebaut. Der Baustein IC1 ist von der Type Telefunken SAS 660 und die anderen von der Type Telefunken SAS 670. Der Baustein IC1 (SAS 660) ist so ausgebildet, daß er beim Einschalten der Betriebsspannung den gesamten Zähler in die Anfangsstellung bringt, in der keine der an die Ausgänge angeschlossenen dreißig Leuchtdioden 11 erregt ist. In dieser Stellung führt auch keine der dreißig Ausgangsleitungen 110 ein Signal. Jeder an den Anschluß 101 angelegte Zählimpuls (Betätigung der Plustaste 111 oder Minustaste 112) schaltet den Zähler um eine Position weiter, so daß die den einzelnen Zählerständen zugeordneten Leuchtdioden 15 nacheinander erregt werden.

Die Gesamtfunktion ist also folgende : Durch Einschalten des Gerätes befindet sich der Zähler (Fig. 6) im Anfangszustand. Jedes Betätigen einer Taste 21 (Schalter 111) oder 22 (Schalter 112) schaltet den Zähler in die nächste Position, wobei die dreißig Schaltverstärker (Fig. 4) nacheinander angesteuert werden und die jeweilige Arbeitsposition durch die zugeordnete Leuchtdiode 11 angezeigt wird. War eine Plustaste betätigt, so wird gleichzeitig das zugeordnete Heizelement 15 eingeschaltet und bewirkt eine entsprechende Markierung 32 des Markierungsträgers 30. War eine Minustaste gedrückt, so werden die an den Eingängen 110 der Schalterverstärker liegenden Signale über den Transistor 50 kurzgeschlossen, so daß das dem jeweiligen Zählerzustand zugeordnete Heizelement 15 nicht eingeschaltet wird.

Der in Fig. 5 gezeigte Anschluß 120 dient zur Ausgabe von Zählimpulsen an den Rechner 17 (Fig. 1). Bei jeder Betätigung der Plustaste 21 (Schalter 111) gelangt ein Impuls vom Kollektor des Transistors 60 an den Rechner, so daß dieser nach Abschluß des Arbeitsvorganges die Anzahl der positiven Befunde addiert hat.

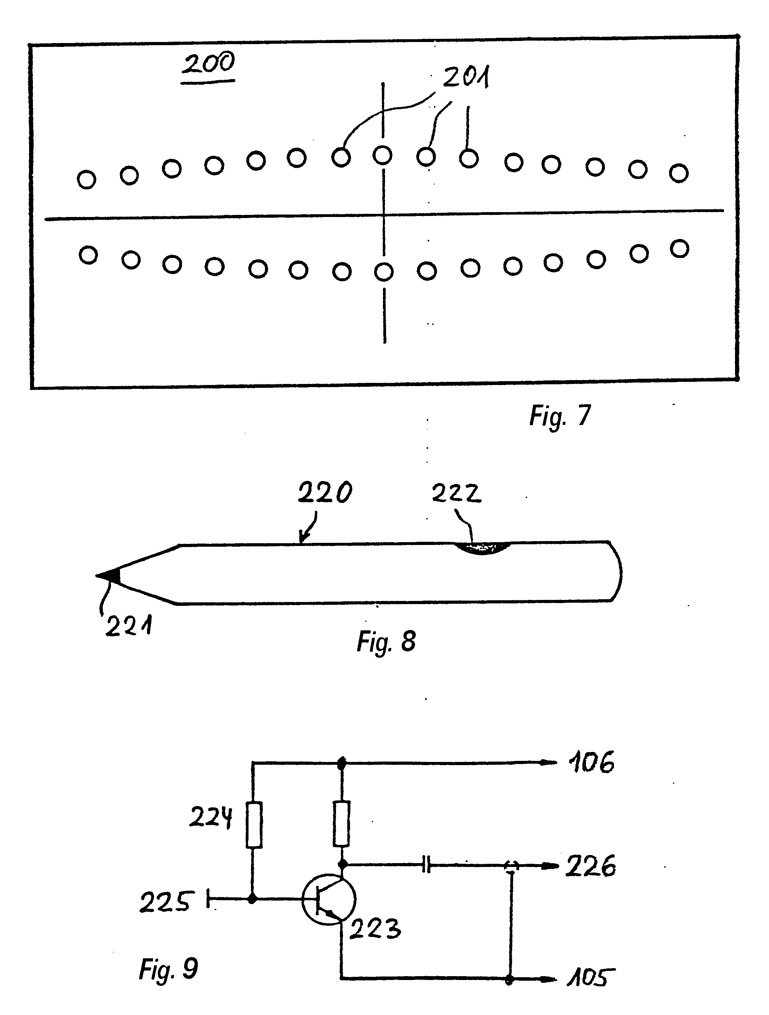

Fig. 7 zeigt nun in schematischer Darstellung ein Anzeigetableau 200, das an das Grundgerät nach den Figuren 3 bis 6 angeschlossen werden kann. Dreißig Lampen 201 sind in den Interdentalräumen eines Zahnschemas angeordnet, das vorzugsweise als breiter, lachender Mund eines Kindern wohlbekannten Gesichtes dargestellt ist. Bei Ansteuerung der Heizelemente 15 leuchtet gleichzeitig das der jeweiligen Position zugeordnete Lämpchen auf.

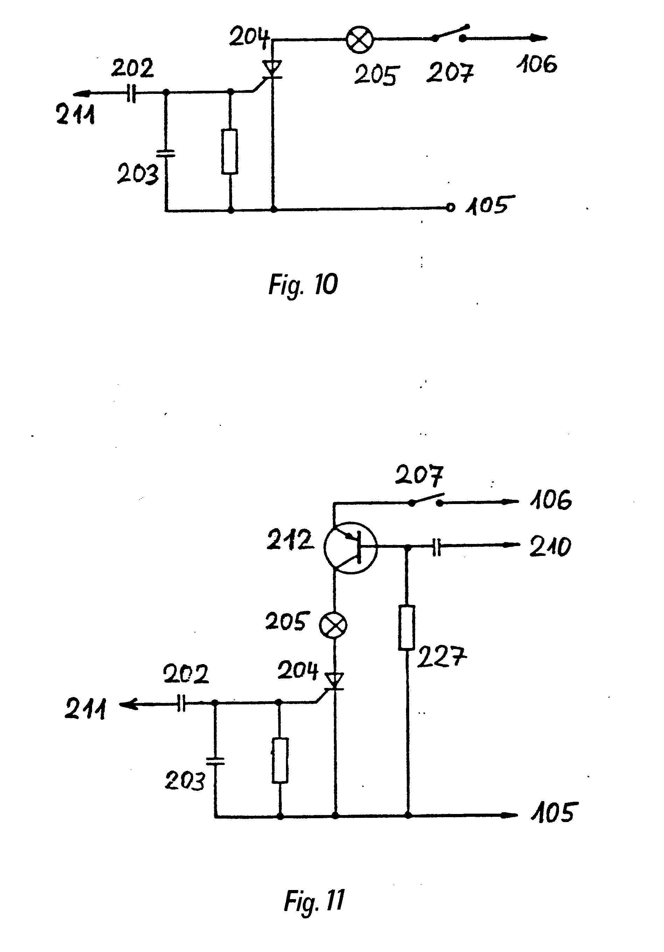

Die für jedes Lämpchen vorgesehene Ansteuerschaltung zeigt Fig. 10. Der Eingang 211 ist an dem Schaltverstärker (Fig. 4, gestrichelter Anschluß 211) angeschlossen und zündet den Thyristor 204, wenn ein entsprechendes Signal am Kondensator 57 (Fig. 4) vorhanden ist. Das Lämpchen 205 leuchtet auf und dieser Zustand wird solange gespeichert, bis über eine Löschtaste 207 die Stromzufuhr zum Thyristor 204 unterbrochen wird. Am Ende eines vollständigen Untersuchungsvorganges wird also durch entsprechendes Aufleuchten der angesteuerten Lampen (Zahnbelag vorhanden) dem Patienten ein eindrucksvolles Bild vom Stand seiner Mundhygiene vermittelt.

Fig. 11 zeigt eine Weiterbildung der Ansteuerschaltung nach Fig. 10, und zwar kann hier der während einer vorherigen Untersuchung ermittelte Untersuchungsbefund durch das Ergebnis einer neuen Untersuchung überschrieben werden. Das Ergebnis der vorherigen Untersuchung kann hierbei auf einem Speichergerät mit Codierkarte festgehalten und in die erfindungsgemäße Vorrichtung eingelesen werden, um dem Patienten vor Beginn der Folgeuntersuchung wieder vor Augen geführt zu werden. Durch Verlöschen oder Neuaufleuchten der verschiedenen Leuchtpunkte kann visuell eine Verbesserung oder Verschlechterung des neuen Befundes verfolgt werden.

Die Funktion der Ansteuerschaltung nach Fig. 11 ist folgende : Über ein Speichergerät werden sämtliche in der ersten Untersuchung gezündeten Thyristoren 204 erneut gezündet, so daß der erste Befund auf dem Anzeigetableau erscheint. Um nach jedem neuen Befund alle Thyristoren auch löschen zu können, ist in die Versorgungsleitung ein Transistor 212 eingefügt, der durch den Widerstand 227 in leitendem Zustand gehalten wird. Über den Kondensator 202 erhält der Transistor 212 jedesmal einen Löschimpuls (ca. 0,1 Sekunden Dauer) von dem Anschluß 210 (gestrichelter Anschluß in Fig. 4), wenn der Zähler (Fig. 6) den dem jeweiligen Schaltverstärker zugeordneten Zählerstand erreicht. Bei positivem Befund gelangt ein Zündimpuls von längerer Dauer als der Löschimpuls auf den Eingang 211, so daß der Thyristor anschließend die zugeordnete Lampe 205 wieder zum Erleuchten bringt. Bei negativem Befund entsteht am Eingang 211 kein Steuersignal, so daß kein erneutes Zünden des Thyristors 204 erfolgt. Der Kondensator 203 dient zur Unterdrückung kurzzeitiger Störimpulse.

Der in Fig. 8 gezeigte Sensorgriffel 220 hat zwei Sensorflächen 221 und 222. Bei positivem Befund wird das Zahnfleisch des Patienten unterhalb des betreffenden Interdentalraumes mit der Sensorfläche 221 berührt, bei negativem Befund die Sensorfläche 222 mit dem Finger des Untersuchenden. An jede dieser beiden Sensorflächen 221 und 222 ist der Eingang 225 eines Niederfrequenzverstärkers mit einem Transistor 223 angeschlossen (Fig. 9), der über einen Vorwiderstand 224 in den linearen Bereich vorgespannt ist. Bei Berühren des Einganges 225 wird am Ausgang 226 eine Brummspannung erzeugt. Je ein Verstärker der Fig. 9 ist anstelle der Eingabetasten 111 bzw. 112 an die Anschlüsse 108 bzw. 109 des Impulsgebers angeschlossen (gestrichelte Leitungen 208 bzw. 209 in Fig. 5) und kippt den entsprechenden Monoflop bei Berührung der Sensorfläche um. Die Vorverstärker (Fig. 9) können in den Griffel integriert sein.

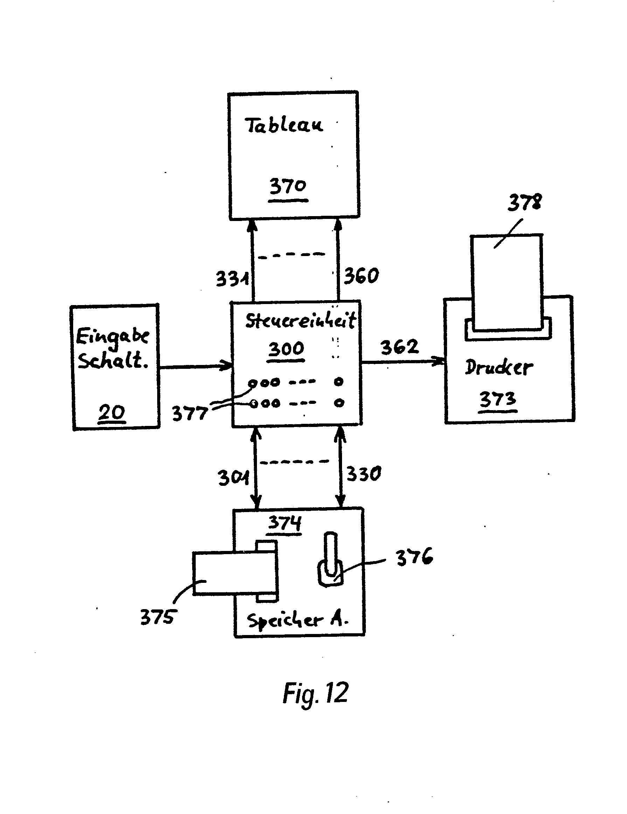

Das in Fig. 12 gezeigte Blockschaltbild zeigt eine Steuereinheit 300, die zusammen mit einem Drucker 373 ähnliche Aufgaben wie das Registriergerät 10 der Fig. 1 übernimmt. Sie enthält ebenfalls ein Feld von Leuchtdioden 377 zur Anzeige der jeweiligen Untersuchungsposition. Anstelle der Heizelemente 15 ist ein Druckwerk 373 vorgesehen, das von der Steuereinheit 300 derart über ein Kabel 362 angesteuert wird, daß es auf einem mit einem Zahnschema bedruckten Ausgabepapier 378 die den einzelnen Zahnpositionen zugeordneten Befunde in räumlicher Zuordnung ausdruckt.

Die Steuereinheit kann auch in ähnlicher Weise ein Anzeigetableau 370 (aufgebaut wie Fig. 7) ansteuern, um parallel zur Druckerausgabe ein visuelles Bild des Untersuchungsergebnisses darstellen zu können.

An die Steuereinheit 300 ist außerdem über Leitungen 301 bis 330 ein Speichergerät 374 angeschlossen, mit dem die einzelnen Untersuchungsergebnisse auf einer Magnetkarte 375 in bekannter Weise aufgezeichnet werden können. Hierzu wird ein Betriebsartenschalter 376 auf « Aufzeichnung » geschaltet. Diese Magnetkarte oder Codierkarte kann in einer Patientenakte aufbewahrt werden und steht für Nachuntersuchungen zur Verfügung. Bei einer solchen Nachuntersuchung wird die Magnetkarte in das Speichergerät 374 eingelegt und der Schalter 376 auf « Wiedergabe » geschaltet. Jetzt werden die auf der Magnetkarte 375 gespeicherten Befundsdaten gelesen und über die Steuereinheit 300 auf das Anzeigetableau 370 gegeben. Der so sichtbare alte Befund kann dann — wie in Verbindung mit den Figuren 7 und 11 erläutert — durch das neue Befundergebnis überschrieben werden.

Die Magnetkarte kann mehrere Aufzeichnungsspuren aufweisen, von denen jeweils eine für eine Untersuchung beschrieben wird. Auf diese Weise können wahlweise die Ergebnisse mehrerer Untersuchungen abgerufen und auf dem Tableau dargestellt werden.

Während sich die bisherige Beschreibung hauptsächlich auf den Approximalraum-Plaque-Index (API) bezog, bei dem alle Interdentalräume auf positiven bzw. negativen Befund ausgewertet wurden, ist es natürlich auch möglich, die Erfindung auf andere Auswerteverfahren anzuwenden.

Die Befundergebnisse müssen auch nicht unbedingt den Interdentalräumen zugeordnet sein, sondern können sich auch auf die einzelnen Zahnpositionen des Zahnschema beziehen.

Bei der Bestimmung des Plaque-Index nach Silness-Löe werden nicht alle Interdentalräume, sondern jeweils vier Flächen ausgewählter Zähne bewertet. Dementsprechend muß die räumliche Darstellung der Zahnformel auf der Markiereinrichtung angepaßt sein.

**Ansprüche**

1. Vorrichtung zur Aufzeichnung und Auswertung medizinischer Befunde, mit einer an eine zwei verschiedene Schaltbefehle liefernde Eingabevorrichtung (20, 220, Fig. 5) angeschlossenen elektronischen Schaltung (Fig. 3 bis 6 und 9 bis 11) zur Informationsverarbeitung und Erzeugung bildlicher Darstellungen (Fig. 2 und 7) der Befunde, in besonderer Ausführung zur Aufzeichnung und Auswertung von Zahnbefunden, dadurch gekennzeichnet, daß ein Zähler (Fig. 6), eine der Anzahl der Untersuchungspositionen entsprechende Anzahl von Markierelementen (15) einer Markiereinrichtung (13) zum Markieren eines mit einem Zahnschema bedruckten Markierungsträgers (30) und den Markierelementen (15) jeweils vorgeschaltete Schaltverstärker (Fig. 4) vorgesehen sind, daß die Markierelemente (13) den Untersuchungspositionen im Zahnschema entsprechend angeordnet sind und daß die Eingabevorrichtung (20, 220, Fig. 5), der Zähler (Fig. 6) und die Schaltverstärker (Fig. 4) derart ausgebildet und miteinander verkuppelt sind, daß der Zähler (Fig. 6) bei jedem der beiden Schaltbefehle um eine Position weiterschaltet und den der jeweiligen Untersuchungsposition entsprechenden Schaltverstärker (4) vorbereitet, und daß bei Vorliegen des einen Schaltbefehls der vorbereitete Schaltverstärker (Fig. 4) das zugeordnete Markierelement (15) erregt.

2. Vorrichtung nach Anspruch 1, dadurch gekennzeichnet, daß die Markiereinrichtung (13) aus einer der Anzahl der Untersuchungspositionen entsprechenden Anzahl von Heizelementen (15) und einem darüber angeordneten wärmeempfindlichen Papier (30) besteht, und daß die Heizelemente (15) räumlich an den Untersuchungspositionen des Zahnschemas angeordnet und bei positivem Befund kurzzeitig erregbar sind.

3. Vorrichtung nach Anspruch 1 oder 2, dadurch gekennzeichnet, daß eine Anzeigeeinrichtung mit einer der Zahl der vorhandenen Untersuchungspunkte entsprechenden Zahl von ebenfalls nach dem Zahnschema angeordneten Anzeigeelementen (11) vorhanden ist, die über den Zähler (Fig. 6) mit jedem Schaltimpuls nacheinander angesteuert werden und die jeweilige Untersuchungsposition anzeigen.

4. Vorrichtung nach Anspruch 3, dadurch gekennzeichnet, daß als Anzeigeelemente (11) Anzeigelämpchen, vorzugsweise LED, vorgesehen sind.

5. Vorrichtung nach einem der Ansprüche 1 bis 4, dadurch gekennzeichnet, daß zur Eingabe der Befunde ein zwei Schaltkontakte (111, 112) aufweisender Fußschalter (20) vorgesehen ist.

6. Vorrichtung nach Anspruch 1, dadurch gekennzeichnet, daß eine einerseits die gesamten Schaltimpulse und andererseits nur die den positiven Befunden entsprechenden Impulse zählende und ins Verhältnis setzende Recheneinrichtung (17) mit einer Anzeigevorrichtung (18) vorhanden ist, welche den in der Recheneinrichtung gebildeten Quotienten in Prozent anzeigt.

7. Vorrichtung nach Anspruch 6, dadurch gekennzeichnet, daß an einem nur die den positiven Befunden entsprechenden Schaltbefehle verarbeitenden Impulsgeber (Fig. 5) ein die den positiven Befunden entsprechenden Impulse addierender Taschenrechner (17) mit Prozenttaste angeschlossen (105; 120) ist.

8. Vorrichtung nach einem oder mehreren der Ansprüche 1 bis 7, gekennzeichnet durch ein Anzeigetableau (200), dessen Anzeigelampen (201) an den einzelnen Untersuchungspositionen im Zahnschema auf einer Trägerwand angeordnet sind und den positiven Befunden entsprechend eingeschaltet werden.

9. Vorrichtung nach Anspruch 8, dadurch gekennzeichnet, daß die Anzeigelampen (201) der Kontur eines über-dimensional gezeichneten, Zahnschemas mit entsprechender Anordnung der Anzeigelampen folgend in gleichmäßigem Abstand voneinander auf der Trägerwand angeordnet sind.

10. Vorrichtung nach Anspruch 8 oder 9, dadurch gekennzeichnet, daß die Ansteuerschaltungen (Fig. 10, 11) für die Anzeigelampen (201) Speichereigenschaft (Thyristor 204) haben und so ausgelegt sind, daß die Anzeigelampen auch nach Erlöschen der Schaltimpulse eingeschaltet bleiben, und daß in die Stromkreise der Lampen ein gemeinsamer Trennschalter (207) zum Löschen der Anzeige eingeschaltet ist.

11. Vorrichtung nach Anspruch 10, dadurch gekennzeichnet, daß in die Stromkreise der Lampen jeder Ansteuerschaltung (Fig. 11) ein Trenntransistor (212) eingefügt ist, der bei Vorliegen eines neuen anzuzeigenden Untersuchungsbefundes kurz sperrbar ist.

12. Vorrichtung nach einem der Ansprüche 1 bis 4 und 6 bis 11, dadurch gekennzeichnet, daß zur Eingabe der Befunde ein zwei Schaltkontakte aufweisender Fingerschalter vorgesehen ist.

13. vorrichtung nach Anspruch 12, dadurch gekennzeichnet, daß der Fingerschalter als Sensorgriffel (220) ausgebildet ist, mit einerseits einer Sensorspitze (221), über die z. B. bei positivem Befund ein erster Schaltimpuls und andererseits einer am Umfang des Griffels angeordneten Sensorplatte (222), über die z. B. bei negativem Befund ein zweiter Schaltimpuls erzeugt werden kann.

14. Vorrichtung nach Anspruch 13, dadurch gekennzeichnet, daß in dem Sensorgriffel zwei Niederfrequenzverstärker (Fig. 9) eingebaut sind, welche durch Berührung einerseits der Sensorspitze (221) und andererseits der Sensorplatte (222) einen Schaltimpuls an dem entsprechenden Ausgang (226) auslösen.

**Claims**

1. Apparatus for the recording and evaluation of medical test results, having an electronic circuit arrangement (Figures 3 to 6 and 9 to 11) connected to an input device (20, 220, Figure 5) which supplies two different switching orders, for the information processing and production of pictorial representations (Figures 2 and 7) of the findings, in particular realisation for the recording and evaluation of dental test results, characterised in that a counter (Figure 6), a number, corresponding to the number of examination positions, of marker elements (15) of a marker apparatus (13) for marking a marking carrier (30) printed with a dental diagram and switching amplifiers (Figure 4) each connected before the marker elements (15) are provided, in that the marker elements (13) are arranged in accordance with the examination positions in the dental diagram and in that the input device (20, 220, Figure 5), the counter (Figure 6) and the switching amplifiers (Figure 4) are so formed and coupled with one another that the counter (Figure 6) at each of the two switching orders steps further by one position and prepares the switching amplifier (4) corresponding to the respective examination position, and in that when the one switching order is present the prepared switching amplifier (Figure 4) energises the associated marker element (15).

2. Apparatus according to Claim 1, characterised in that the marker apparatus (13) consists of a number of heater elements (15) corresponding to the number of examination positions and a heat-sensitive paper (30) arranged thereabove, and in that the heater elements (15) are arranged three-dimensionally at the examination positions of the dental diagram and are briefly energisable in the case of positive findings.

3. Apparatus according to Claim 1 or 2, characterised in that a display apparatus is present having a number, corresponding to the number of existing examination points, of display elements (11) likewise arranged according to the dental diagram which are actuated in succession with each switch pulse through the counter (Figure 6) and display the respective examination position.

4. Apparatus according to Claim 3, characterised in that indicator lamps, preferably LED, are provided as display elements (11).

5. Apparatus according to one of Claims 1 to 4, characterised in that a pedal switch (20) having two switch contacts (111, 112) is provided for the input of the test results.

6. Apparatus according to Claim 1, characterised in that a calculator (17) which counts on the one hand the total switch pulses and on the other hand only the pulses corresponding to the positive findings and sets them in proportion is present with a display device (18) which displays, in percentage, the quotient formed in the calculator.

7. Apparatus according to Claim 6, characterised in that a pocket calculator (17), which adds the pulses corresponding to the positive findings, with percentage key (105, 120) is connected to a pulse emitter (Figure 5) which processes only the switching orders corresponding to the positive findings.

8. Apparatus according to one or more of Claims 1 to 7, characterised by a display panel (200) the indicator lamps (201) of which are arranged on a carrier wall at the individual examination positions in the dental diagram and are switched on according to the positive findings.

9. Apparatus according to Claim 8, characterised in that the indicator lamps (201) are arranged at regular distances from one another on the carrier wall, following the contour of a dental diagram, drawn oversize, with corresponding arrangement of the indicator lamps.

10. Apparatus according to Claim 8 or 9, characterized in that the actuator circuits (Figures 10, 11) for the indicator lamps (201) have storage property (thyristor 204) and are designed so that the indicator lamps remain switched on even after extinguishing of the switch pulses, and in that a common cut-off switch (207) for extinguishing the display is connected into the current circuits of the lamps.

11. Apparatus according to Claim 10, characterised in that a cut-off transistor (212) is inserted into the current circuits of the lamps of each actuator circuit arrangement (Figure 11) and is briefly blockable when an new examination result for display is present.

12. Apparatus according to one of Claims 1 to 4 and 6 to 11, characterised in that a finger switch having two switch contacts is provided for the input of the results.

13. Apparatus according to Claim 12, characterised in that the finger switch is formed as a sensor stylus (220) with for the one part a sensor tip (221) through which for example in the case of a positive result a first switch pulse can be generated, and for the other part a sensor panel (222) arranged on the periphery of the stylus, through which for example in the case of a negative result a second switch pulse can be generated.

14. Apparatus according to Claim 13, characterised in that in the sensor stylus there are installed two low-frequency amplifiers (Figure 9) which, by contacting of the sensor tip (221) on the one hand and of the sensor panel (222) on the other, trigger a switch pulse at the appropriate output (226).


**Revendications**

1. Dispositif pour l'enregistrement et l'exploitation d'observations médicales qui comprend un circuit électronique (Figures 3 à 6 et 9 à 11) relié à un bloc d'entrée (20, 220, Figure 5), émettant deux ordres de commutation différents pour le traitement de l'information et la production de représentations visuelles (Figures 2 et 7) des observations, notamment dispositif pour l'enregistrement et l'exploitation de l'état des dents, caractérisé en ce qu'il comprend un compteur (Figure 6), une pluralité d'éléments de marquage (15) d'un bloc de marquage (13), en nombre correspondant à celui des positions d'examen, pour le marquage d'un support de marquage (30) qui porte un schéma dentaire imprimé sur lui, et des amplificateurs de commutation (Figure 4) montés en avant de chacun des éléments de marquage (15), en ce que les éléments de marquage (13) sont disposés de manière à correspondre aux positions d'examen dans le schéma dentaire, en ce que le bloc d'entrée (20, 220, Figure 5), le compteur (Figure 6) et les amplificateurs de commutation (Figure 4) sont constitués et reliés les uns aux autres de telle manière qu'à chacun des deux ordres de commutation le compteur (Figure 6) avance d'une position de commutation et prépare l'amplificateur de commutation (4) qui correspond à la position d'examen nouvelle et en ce que, lors de la réception de l'un des ordres de commutation, l'amplificateur préparé (Figure 4) excite l'élément de marquage (15) correspondant.

2. Dispositif selon la revendication 1, caractérisé en ce que le bloc de marquage (13) est constitué par un certain nombre d'éléments chauffants (15) qui correspond au nombre des positions d'examen et par un papier (30) sensible à la chaleur placé au-dessus d'eux et en ce que les éléments chauffants (15) sont associés dans l'espace aux positions d'examen du schéma dentaire et, en cas d'observation positive, sont excités pendant un temps court.

3. Dispositif selon l'une des revendications 1 ou 2, caractérisé en ce qu'il comprend un dispositif de visualisation comportant des éléments indicateurs (11), dont le nombre correspond au nombre des points d'examen et qui sont également disposés d'après le schéma dentaire, qui sont mis en action successivement à chaque impulsion de commutation transmise par un compteur (Figure 6) et indiquent la position d'examen correspondante.

4. Dispositif selon la revendication 3, caractérisé en ce que les éléments indicateurs (11) sont des petites lampes indicatrices, de préférence des diodes lumineuses.

5. Dispositif selon l'une des revendications 1 à 4, caractérisé en ce que l'enregistrement des observations s'effectue au moyen d'un commutateur (20) à commande au pied comportant deux contacts de commutation (111, 112).

6. Dispositif selon la revendication 1, caractérisé en ce qu'il comprend un dispositif de comptage (17), qui compte d'une part toutes les impulsions de commutation et, d'autre part, seulement les impulsions correspondant aux observations positives et qui en fait le rapport, et un dispositif indicateur (18) qui affiche sous forme de pourcentage le quotient calculé par le dispositif de comptage.

7. Dispositif selon la revendication 6, caractérisé en ce qu'à un émetteur d'impulsions (Figure 5) qui ne traite que les ordres de commutation correspondant aux observations positives est relié à un calculateur de poche (17), muni d'une touche des pourcentages (105, 120), qui fait l'addition des impulsions correspondant aux observations positives.

8. Dispositif selon l'une des revendications 1 à 7, caractérisé en ce qu'il comporte un tableau indicateur (200) dont les lampes indicatrices (201) sont réparties dans les différentes positions d'examen sur le schéma dentaire placé sur une paroi support et s'allument en cas d'observation positive.

9. Dispositif selon la revendication 8, caractérisé en ce que les lampes indicatrices (201) sont disposées le long du contour d'un schéma dentaire de grandes dimensions, les lampes se suivant dans l'ordre à des distances égales les unes des autres sur la paroi de support.

10. Dispositif selon l'une des revendications 8 ou 9, caractérisé en ce que les circuits de mise en action (Figures 10, 11) des lampes indicatrices (201) fonctionnent comme mémoire (thyristor 204) et sont montés de telle manière que même après la cessation des impulsions de commutation, les lampes indicatrices restent branchées et en ce que dans les circuits de courant des lampes un interrupteur commun (207) est intercalé pour arrêter les dispositifs indicateurs.

11. Dispositif selon la revendication 10, caractérisé en ce que les circuits de courant des lampes de chaque circuit de mise en action (Figure 11) comportent un transistor sectionneur (212) qui peut être coupé, lorsqu'un nouveau résultat d'observation doit être affiché.

12. Dispositif selon l'une des revendications 1 à 4 et 6 à 11, caractérisé en ce que l'enregistrement des observations s'effectue au moyen d'un commutateur digital comportant deux contacts de commutation.

13. Dispositif selon la revendication 12, caractérisé en ce que le commutateur digital est un style de détecteur (220) comportant d'une part, une pointe détectrice (221) par laquelle, en cas de résultat d'observation positif, par exemple, on peut produire une première impulsion de commutation et, d'autre part, une plaque détectrice (222), montée sur le pourtour du style, par laquelle, en cas de résultat d'observation négatif, par exemple, on peut produire une deuxième impulsion de connexion.

14. Dispositif selon la revendication 13, caractérisé en ce que le style détecteur comporte deux amplificateurs à basse fréquence (Figure 9) qui, par contact, d'une part, avec la pointe détectrice (221) et, d'autre part, avec la plaque détectrice (222), émettent une impulsion de commutation à la sortie correspondante (226).

Fig. 1

Fig. 2

Fig. 3

Fig. 4

Fig. 5

0 032 917

3

Fig. 6a

Fig. 6b

Fig. 7

Fig. 8

Fig. 9

6

Fig. 10

Fig. 11

Fig. 12

8